# EUROPEAN PATENT APPLICATION

(11) **EP 1 192 855 A2**
(43) Date of publication of application: **03.04.2002**
(21) Application number: 01305523.1
(22) Date of filing: 26.06.2001
(51) Int. Cl.: A01G 25/09

(54) **An alignment control for a water drive, center pivot irrigation system**

(30) Priority: 28.09.2000 US 672331
(71) Applicant: VALMONT INDUSTRIES INC., Valley, Nebraska 68064 (US)
(72) Inventor: Malsam, Craig S., Valley, Nebraska 68064 (US); Kreikemeier, Bruce, Valley, Nebraska 68064 (US)
(74) Representative: Thomson, Paul Anthony

(57) **Abstract**

A water drive, center pivot irrigation system is disclosed wherein the alignment the intermediate drive units is achieved by generating electricity required to control solenoid valves operatively connected to spinner bars mounted on the upper end of spinner shaft which drive the drive wheels on the drive unit.

## Description

### BACKGROUND OF THE INVENTION

### 1. FIELD OF THE INVENTION

This invention relates to a water drive center pivot irrigation system and more particularly to an alignment control for a water drive center pivot irrigation system. Even more particularly, this invention relates to an alignment control for a water drive center pivot irrigation system with the alignment being achieved by the generation of electricity which is required to control solenoid valves which form a part of the alignment control.

### 2. DESCRIPTION OF THE RELATED ART

Conventional center pivot irrigation systems generally comprise a main water boom supported upon a plurality of drive units or towers which propel the main water boom around a center pivot structure. Normally, the main water boom is comprised of a plurality of pipe sections which are bolted together in an end-to-end manner. A flexible joint is provided in the main water boom at each drive tower. Usually, the last regular drive tower is the master unit and is continually operated or operated on a percentage basis. An alignment control is provided at each of the drive towers inwardly of the last regular drive unit and senses the angular relationship of the pipe sections in the flexible joint area. For example, as the last regular drive unit moves with respect to the drive tower inwardly thereof, an angular relationship is created at the joint at the unit inwardly of the last regular drive unit so that the drive mechanism on the drive tower is actuated so that it will propel the drive tower to keep up with the last regular drive unit. Each of the drive towers are driven or actuated in response to the alignment control at each of those drive towers with the alignment control being of many differing designs.

The drive towers of a center pivot irrigation system may be of the electric drive or of the water drive type. In some instances, the drive towers are also propelled by compressed air motors. Although the electric drive towers do work quite well, sufficient electricity is not always available where the center pivot irrigation system is installed. In those cases, the drive towers are sometimes propelled by water drive mechanisms wherein water flowing through the main water boom is utilized to drive the drive units. In the water drive center pivot irrigation systems, the speed of the drive tower is varied by varying the amount of water to the wheel drive mechanism. Mechanical tolerance stack-ups, varying water pressures and water leaks lead to inconsistent alignment control and mechanical failures.

### SUMMARY OF THE INVENTION

The water drive center pivot irrigation system of this invention comprises a center pivot structure having an elongated main water boom extending outwardly therefrom. A water pump is provided for supplying water under pressure to the main water boom. The main water boom is supported by a plurality of spaced-apart wheeled drive towers or towers including a last regular drive unit (LRDU) and at least one intermediate drive tower positioned between the center pivot structure and the LRDU. Each of the drive towers have drive wheels which are driven by a gearbox operatively connected thereto. A rotatable spinner shaft is operatively secured to the gearbox and extends upwardly therefrom and has a spinner bar mounted on the upper end thereof. Rotation of the spinner shaft, which is caused by water under pressure being supplied to the spinner bar and being discharged therefrom, causes the gearbox to drive the drive wheels on the associated drive tower.

A first water conduit on the LRDU fluidly connects the main water boom and the spinner bar thereon for supplying water thereto which, when the pump is operating, will rotate the spinner bar and spinner shaft due to the water being discharged from the water discharge outlets on the outer ends of the spinner bar. A conventional dynamo is operatively connected to the spinner shaft on the LRDU which produces a voltage when the spinner shaft is being rotated. The intermediate drive tower has a normally open alignment position switch thereon. A second water conduit on the intermediate drive tower fluidly connects the main water boom and the spinner bar on the intermediate drive tower to supply water to the spinner bar thereon. A second water conduit has an electrically operated valve imposed therein which, when open, will permit water to flow from the main water boom and the spinner bar associated therewith when the pump is being operated. The dynamo is electrically connected to the position switch on the intermediate drive tower and electrically operates the valve thereon whereby the position switch associated therewith will close when the intermediate drive tower has reached a predetermined position with respect to the moving LRDU so that the valve will be opened to cause water to flow to the spinner bar on the intermediate drive tower to cause the rotation thereof thereby moving the intermediate drive tower into alignment with the LRDU. In most cases, there will be several intermediate drive towers with all of the intermediate drive towers being operated in the fashion as that described.

In another embodiment of the invention, the dynamo is not connected to the spinner shaft on the LRDU, but is imposed in the main water boom so that water flowing through the main water boom will cause the dynamo to be rotated to generate electricity with the electricity being supplied to the solenoid valves on each of the intermediate drive towers.

It is therefore a principal object of the invention to provide an improved water drive, center pivot irrigation system.

Still another object of the invention is to provide a means for controlling the alignment of a multiple tower, water drive, center pivot irrigation system.

Still another object of the invention is to provide a system of the type described above wherein the alignment is achieved by generating electricity through the use of dynamos for controlling solenoid valves operatively connected to the wheel drive mechanisms.

These and other objects will be apparent to those skilled in the art.

### BRIEF DESCRIPTION OF THE DRAWINGS

Figure 1 is a partial perspective view of the system of this invention;
Figure 2 is a partial perspective view of one of the drive towers;
Figure 3 is a schematic illustrating the fluid and electrical circuitry of the system; and
Figure 4 is a schematic illustrating the fluid and electrical circuitry of an embodiment of the invention.

### DESCRIPTION OF THE PREFERRED EMBODIMENT

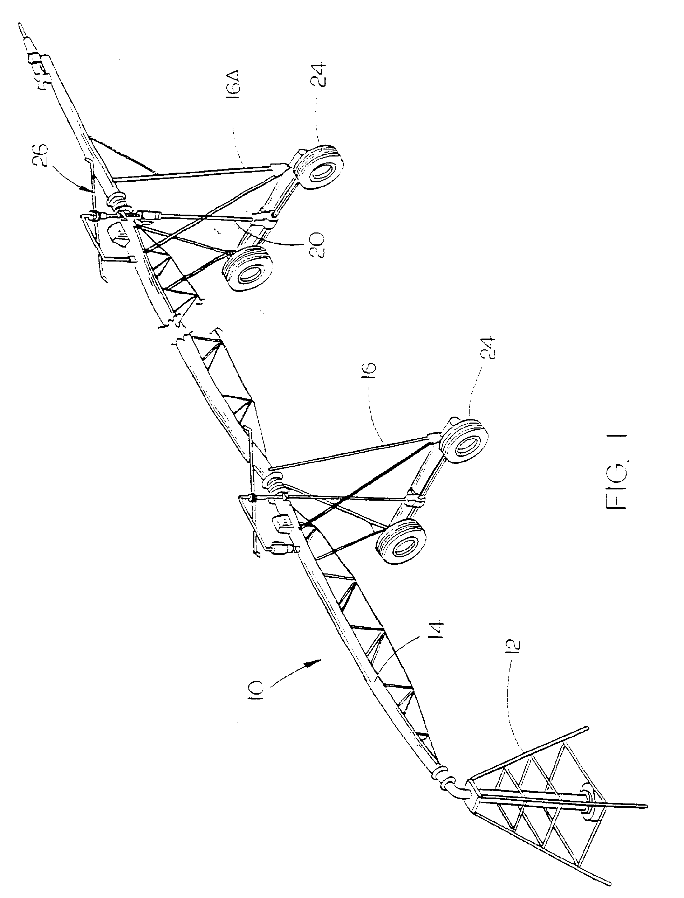

The numeral 10 refers to the water drive, center pivot irrigation system of this invention. System 10 includes a center pivot structure 12 having a main water boom 14 extending outwardly therefrom which is supported by a plurality of drive units or towers 16. The last regular drive unit (LRDU) of the system is referred to by the reference numeral 16A. Although a single intermediate tower 16 is illustrated in Figure 1, it should be understood that there normally will be several intermediate towers inwardly of the LRDU 16A. A conventional, normally open position switch 18 is provided at each of the intermediate towers 16 and is associated with the conventional alignment system. When the unit 16 lags behind the tower outwardly thereof, the position switch 18 is closed to activate the drive mechanism thereon.

The drive mechanism of this invention which is provided at LRDU 16A comprises a spinner shaft 20 which is rotatable about its longitudinal axis and which is supported on the framework of the drive unit. The lower end of the spinner shaft 20 is operatively connected to a gearbox 22 which in turn is operatively connected to the drive wheels 24. Rotation of the spinner shaft 20 causes the drive wheels 24 to be driven.

A spinner or spray bar 26 is secured to the upper end of the spinner shaft 20 and has discharge nozzles 28 and 30 provided at its opposite ends. When water is discharged from the discharge nozzles 28 and 30, the spinner shaft 20 is rotated which in turn causes the drive wheels 24 to be rotated. A water conduit 32 has one end thereof in communication with the interior of the main water boom 14 and which has its other end in communication with spinner bar 26, as illustrated in the drawings. When water is being pumped through the main water boom 14, spray bar 26 will be rotated so that the LRDU 16A is propelled around the center pivot structure 12.

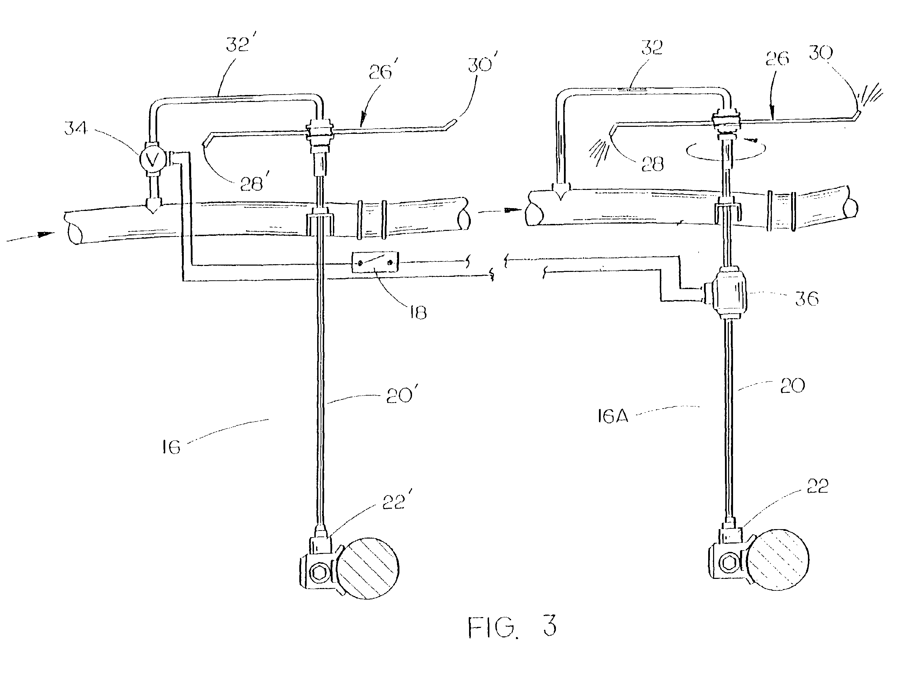

Intermediate tower 16 also has a spinner shaft 20', gearbox 22', spinner bar 26', discharge nozzles 28' and 30' and a conduit 32'. The only difference between the structure on the intermediate tower 16 and the LRDU 16A is that an electrically operated solenoid valve 34 is imposed in the line 30'. The valve 34 and the position switch 18 are electrically connected to a conventional dynamo 36 which is driven by the spinner shaft 20 on the LRDU 16A. As seen in Figure 3, position switch 18 is normally in an open position. When the position switch 18 is closed by the intermediate drive unit 16 lagging behind the LRDU 16A, the electrical circuit to valve 34 is activated so that water flows therethrough to the spinner bar 26' to cause rotation of spinner shaft 20' which in turn causes rotation of the drive wheels 24 on the drive unit 16. Intermediate drive unit 16 is driven until it comes into alignment with LRDU 16A at which time the position switch 18 again opens so that the valve 34 closes to deactivate the rotation of spinner bar 26'.

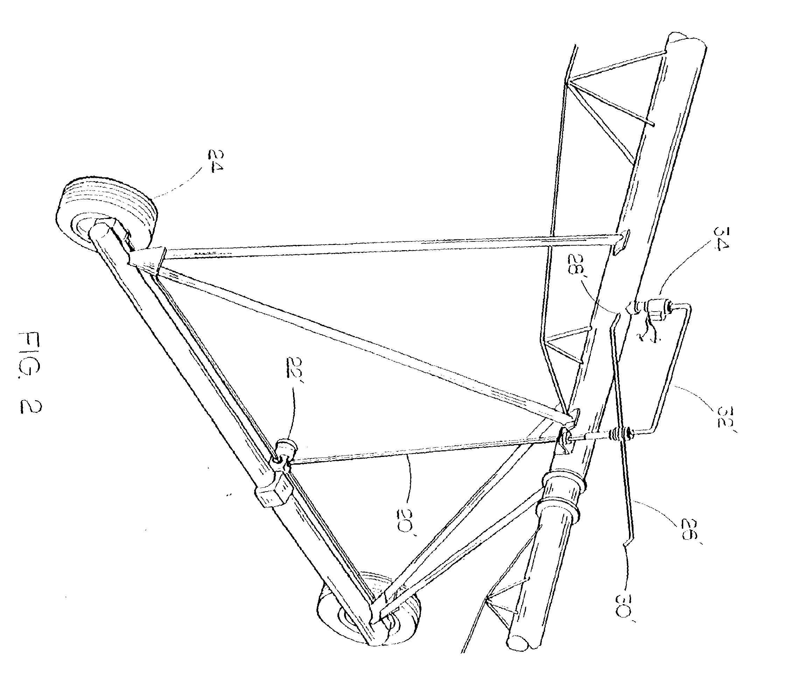

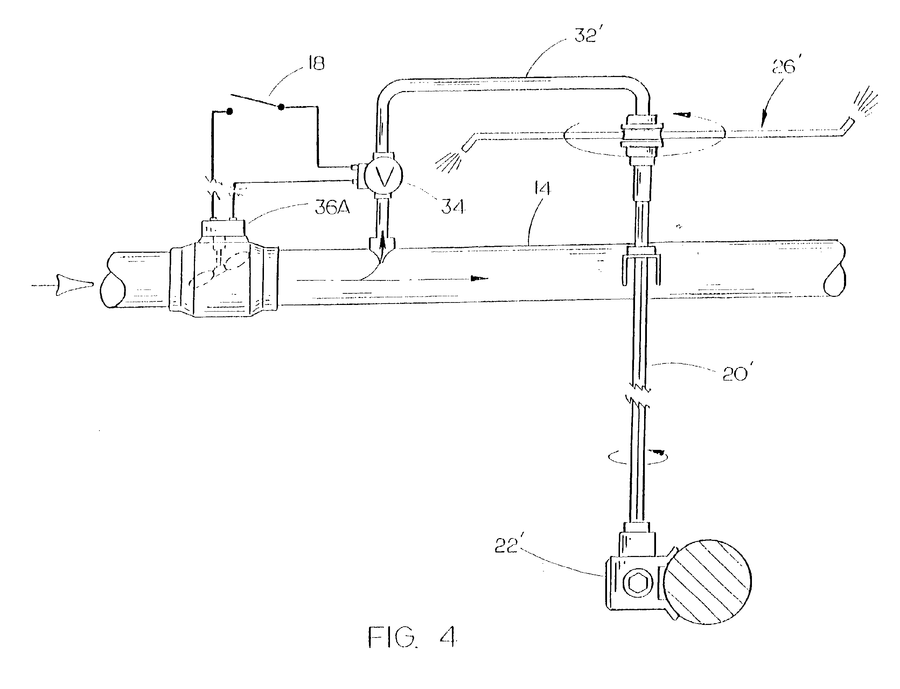

Figure 4 illustrates a modified version of the water drive, center pivot irrigation system of this invention. As seen in Figure 4, the dynamo 36A is not driven by the spinner shaft on the LRDU 16A, but is imposed in the main water boom 14. Thus, the only difference in the embodiment of Figure 4 from that of Figures 1-3 is the placement of the dynamo. The dynamo 36A is operated when water is being pumped through boom 14. The dynamo 36A is electrically connected to the position switches 18 on the tower 16, as described hereinabove.

The invention described herein represents an improvement over the prior art since the mechanism is not subject to mechanical tolerance stack-up, varying water pressures or water leaks which would lead to inconsistent alignment control and mechanical failures.

Thus it can be seen that the invention accomplishes at least all of its stated objectives.

## Claims

1. A water drive, center pivot irrigation system, comprising:
a center pivot structure;
an elongated main water boom, having inner and outer ends, extending outwardly from said center pivot structure;
a water pump for supplying water under pressure to said main water boom;
said main water boom being supported by spaced-apart wheeled drive towers including a last regular drive unit (LRDU) and at least one intermediate drive tower positioned between said center pivot structure and said LRDU;
each of said drive towers having drive wheels which are driven by a gearbox operatively connected thereto; a rotatable spinner shaft, having upper and lower ends. operatively secured to said gearbox whereby rotation of said spinner shaft causes said gearbox to drive said drive wheels on the associated drive tower; an elongated water spinner bar, having first and second ends, mounted on the upper end of said spinner shaft and having a water discharge outlet at each of its said first and second ends;
a first water conduit on said LRDU fluidly connecting said main water boom and said water spinner bar thereon to supply water to the said spinner bar thereon which when said pump is operating, will rotate said spinner bar and spinner shaft due to water being discharged from said water discharge outlets;
a dynamo operatively connected to the spinner shaft on said LRDU which produces a voltage when the said spinner shaft is being rotated;
said intermediate drive tower having a normally open alignment position switch thereon;
a second water conduit on the said intermediate drive tower fluidly connecting said main water boom and the spinner bar on said intermediate drive tower to supply water to the said spinner bar thereon;
said second water conduit having an electrically operated valve imposed therein which, when open, will permit water to flow from said main water boom to the said spinner bar when said pump is operating;
said dynamo being series electrically connected to said position switch on said intermediate drive tower and said electrically operated valve thereon whereby said position switch will close when said intermediate drive tower has reached a predetermined position with respect to the moving LRDU so that said valve will be opened so that water will flow to said spinner bar on said intermediate drive tower to cause the rotation thereof thereby moving the said intermediate drive tower into alignment with said LRDU.

2. A water drive, center pivot irrigation system, comprising:
a center pivot structure;
an elongated main water boom, having inner and outer ends, extending outwardly from said center pivot structure;
a water pump for supplying water under pressure to said main water boom;
said outer end of said main water boom being supported by a plurality of spaced-apart wheeled drive towers including a last regular drive unit (LRDU) and at least one intermediate drive tower positioned between said center pivot structure and said LRDU;
each of said drive towers having drive wheels which are driven by a gearbox operatively connected thereto; a rotatable spinner shaft, having upper and lower ends, operatively secured to said gearbox whereby rotation of said spinner shaft causes said gearbox to drive said drive wheels on the associated drive tower; an elongated water spinner bar, having first and second ends, mounted on the upper end of said spinner shaft and having a water discharge outlet at each of its said first and second ends;
a first water conduit on said LRDU fluidly connecting said main water boom and said water spinner bar thereon to supply water to the said spinner bar thereon which, when said pump is operating, will rotate said spinner bar and spinner shaft due to water being discharged from said water discharge outlets;
a dynamo operatively mounted on said main water boom and being driven by the water flowing therethrough to produce a voltage when said pump is operating;
said intermediate drive tower having a normally open alignment position switch thereon;
a second water conduit on the said intermediate drive tower fluidly connecting said main water boom and the spinner bar on said intermediate drive tower to supply water to the said spinner bar thereon;
said second water conduit having an electrically operated valve imposed therein which, when open, will permit water to flow from said main water boom and the said spinner bar when said pump is operating;
said dynamo being series electrically connected to said position switch on said intermediate drive tower and said electrically operated valve thereon whereby said position switch will close when said intermediate drive tower has reached a predetermined position with respect to the moving LRDU so that said valve will be opened so that water will flow to said spinner bar on said intermediate drive tower to cause the rotation thereof thereby moving the said intermediate drive tower into alignment with said LRDU.
